# EUROPEAN PATENT APPLICATION

(11) **EP 1 245 484 A2**
(43) Date of publication of application: **02.10.2002**
(21) Application number: 02005742.8
(22) Date of filing: 13.03.2002
(51) Int. Cl.: B63C 11/22, F16L 37/36, A62B 9/04

(54) **Tensioning device for the fastening belt of compressed gas bottles**

(30) Priority: 30.03.2001 IT GE010006 U
(71) Applicant: HTM SPORT S.p.A., 16035 Rapallo (Genova) (IT)
(72) Inventor: Minopoli, Guiseppe, 80124 Napoli (IT); Garofolo, Giovanni, 16035 Rapallo, Province of Genova (IT)
(74) Representative: Porsia, Attilio, Dr.

(57) **Abstract**

Disclosed is a tensioning device for tightening the fastening belt (4) of compressed gas bottles to the back (2) of a diver's jacket (1) or the like. The tensioning device includes a pneumatic jack (5) inserted between the two ends of said fastening belt (4), and connected to a suitable compressed gas source through at least one hose (8) provided with a joint (7) for the connection with said jack (5), said jack (5) being fit to supply an optimal tensioning force to the belt (4) for its tightening on the bottles (3), said pneumatic jack (5) being connected to said joint (7) through a joining device provided with means (23) manually controllable by the diver to allow the supply of compressed air to said jack (5) through the opening of a suitable valve (47) positioned in said joint (7).

## Description

The present invention refers to a tensioning device for the fastening belt of the compressed gas bottles to the back of a jacket or the like for underwater activity.

In the co-pending European Patent Application Number 00122000.3 filed on October 10, 2000 by the same Applicant, a tensioning device for the fastening belt of the compressed gas bottles to the back of a jacket or the like for underwater activity is described.

Said device includes a pneumatic jack inserted between the two ends of said bottle or bottles fastening belt and it is connected to a suitable compressed gas source, so to supply an optimal tensioning strength of the belt for its tightening on the bottle itself. Said connection is obtained through a suitable hose provided with a quick joint coupling with a suitable nipple of the jack. Said device has disadvantages, in fact in the very moment the hose is connected to the jack nipple through the quick joint, said pneumatic jack immediately starts to tighten the belt. This instantaneous starting can cause problems, such as for instance the unintentionally insertion beneath said belt of jacket parts or even a diver's hand, which would be caught by force between the belt and the bottle.

Aim of the present invention is to overtake the disadvantages of the above mentioned known tensioning device through a tensioning device for the fastening belt of the compressed gas bottles to the back of a jacket or the like for underwater activities, including a pneumatic jack inserted between the two ends of said bottle fastening belt and connected to a suitable compressed gas source through at least one hose provided with a joint for the connection with said jack, which is fit to supply an optimal tensioning strength of the belt for its tightening on the bottle itself, said pneumatic jack being connected to said joint through a joining device provided with means manually controllable by the diver to allow the supplying of compressed air to said jack through the opening of a suitable valve positioned in said joint.

Then, through the joining device of the present device, the diver will be advantageously able to manually control the compressed air supplying to the jack and at a time after the connection of the joint with said joining device, with a remarkable increase of his security, avoiding the risks previously described in the known devices.

Further aims and advantages of the present invention will be better understood through the following description, to be considered as just illustrative and not limitative description and referred to the enclosed drawings, where:
· Fig. 1 shows an elevation view of the rear part of a jacket to which it is fastened a bottle through a belt tensioned by the present device;
· Fig. 2 shows an enlarged and sectional view of the tensioning device of Fig. 1, provided with a pneumatic jack connected through joining means to a hose for the intaking of compressed air from the bottle;
· Fig. 3 shows a bottom and sectional view of the tensioning device of Fig. 1;
· Fig. 4 shows an elevation and sectional view of the union means of the pneumatic jack to the hose, during a phase of closing of the air supplying.

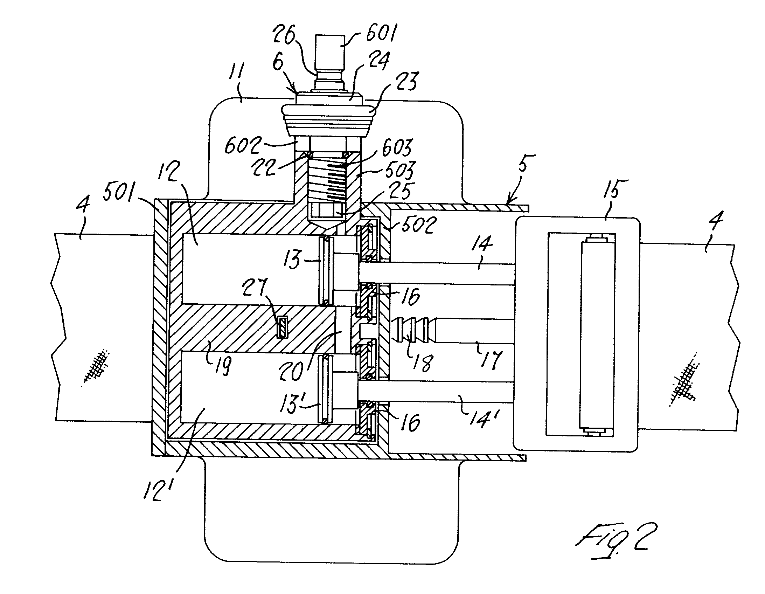

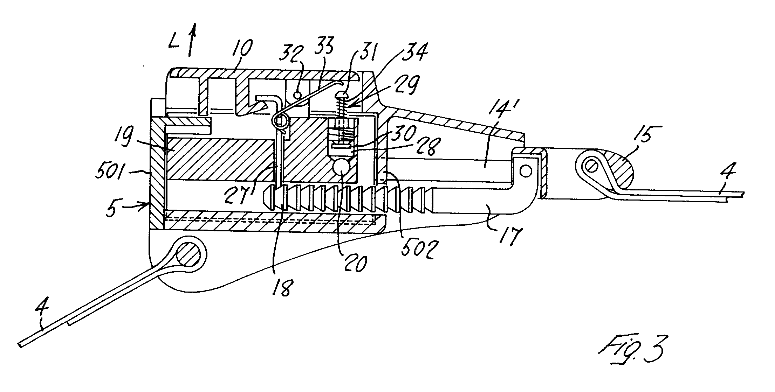

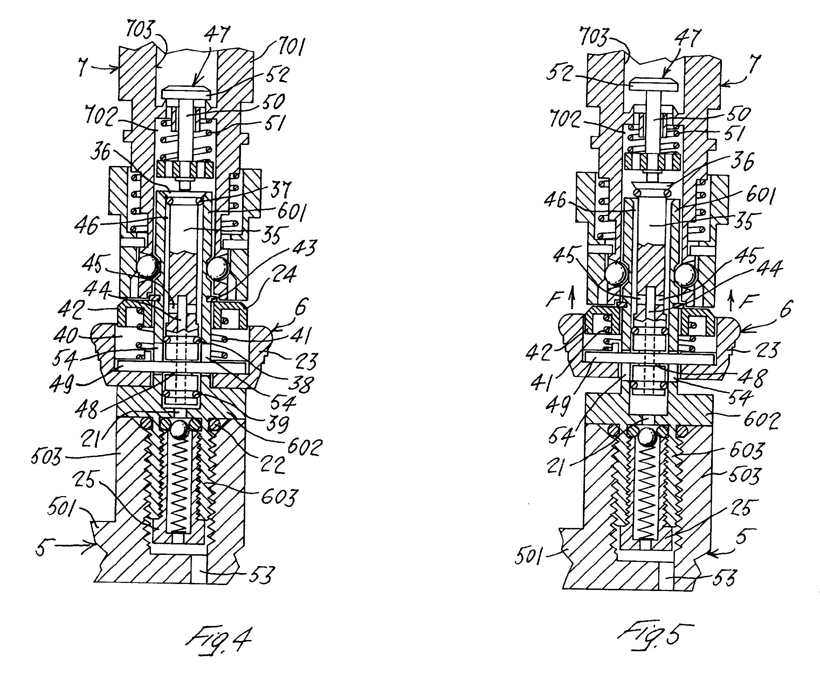

· Fig. 4 shows an elevation and sectional view of the joining means of the pneumatic jack to the hose, during a phase of opening of the air supplying.

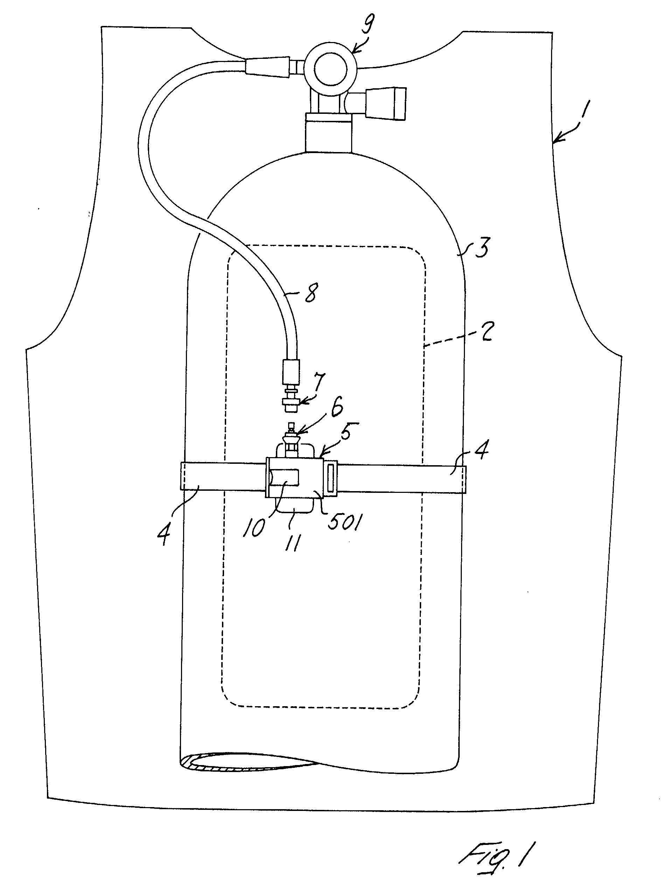

With reference to the figures, and in particular to Fig. 1, with 1 is shown a jacket including on its rear part a stiff back 2 to which it is tightened a compressed air bottle 3 through a belt 4, tensioned by a pneumatic jack 5 connected through a joining device 6 to a quick joint 7 fastened to an end of a hose 8, whose other end is connected to the first reduction stage 9 of said bottle 3. Said jack 5 includes a casing 501 on whose upper part is positioned a lever 10 for the releasing of the belt 4 of said jack 5. On the casing 501 lower part, it is provided a bent plate 11 for the support of the jack 5 to the bottle 3. As well-known, the fastening of the bottle 3 to the back 2 of the jacket 1 is performed first by winding the belt 4 on the bottle 3 making it pass between the jacket 1 and the back 2 and, then, performing the connection between the hose 8 and pneumatic jack 5 so that it is supplied of compressed air and is able to tighten the belt 4 to obtain an optimal tension.

In Fig. 2 is shown in section the pneumatic jack 5 including in the casing 501 two cylinders 12 and 12' within which airtight slide two pistons 13 and 13' provided with two relative stems 14 and 14' articulately connected to a buckle 15 of the belt 4. Said stems 14 and 14' pass through an head wall 502 of the casing 501 and are provided with relative sealing rings 16. To the buckle 15 is also articulately connected, an arm 17 having one end provided with a teeth set 18 going into the jack 5 casing 501 through the head wall 502. The two cylinders 12 and 12' are divided from a central partition 19 where it is obtained a duct 20 through which it is possible to contemporaneously supply with compressed air said two cylinders and then, in a known way, to push to the left the two pistons 13 and 13' and tighten the belt 4. The joining device 6 of the quick joint 7 with the jack substantially includes an hollow upper cylindrical pin 601, an hexagonal section base 602 for the supporting and the screwing of said element 6 to the jack 5 casing 501 and a threaded end part 603, coupling into a relative threaded seat 503 obtained on a wall of said casing 501. Between the end part 603 of the joining device 6 and the threaded seat 503 is provided a sealing ring 22. The compressed air is supplied to the cylinders 12 and 12' through a check valve 25 screwed within said end part 603 of the joining device 6. On the hollow pin 601 is fitted a sleeve 23 which can move vertically as to said pin 601 and is supported by the base 602. Around said hollow pin 601 is also fastened a bushing 24, on which, as it will be seen later on, the sleeve 23 can slide. Said pin 601 is moreover provided with a groove 26 co-operating with fastening means, known in themselves, of the quick joint 7.

In Fig. 3 is shown a bottom and sectional view of the tensioning device of the belt 4. As mentioned, in the tightening of the belt 4 of Fig. 1, the air is supplied to the two cylinders 12 and 12' through the duct 20 obtained in the partition 19. When the pistons 13 and 13' begin to slide to the end of said cylinders 12 and 12', the arm 17 goes into the jack 5 casing 501 and the teeth 18 snap couple with one end of a snug 27, crossing the central partition 19 and whose other end co-operates with the device release lever 10. Said release lever 10 can rotate around a pin 32 against the action of a spring 33, which aims keeping it in the lowered position shown in figure and is fixed to one end of the snug 27 and to the other end is based on the inner part of the release lever 10. The central partition 19 includes on the duct 20 a seat 28 where is housed a valve 29 for the exhausting of air from the cylinders, which is provided with a shutter 30 provided with elastic returning means 34. The release lever 10 is fit to allow at the same time the exhausting of the air from the cylinders through the valve 19 and the unlocking of the belt 4 tightening mechanical security arm 17. In fact, when the diver wants to release the belt and free the bottle, grip the lever making it rotate in the direction of the arrow L around the pin 32 against the action of the spring 33, causing an upward translation of the snug 27, which frees the arm 17, and a contemporaneous lowering of the head 31 of the shutter 30, which let the air contained in the cylinders 12 and 12' free to get out of the duct 20 and then the exhaust valve 29. By leaving the release lever 10, the shutter 30 of said exhaust valve 29 will get back to the closing position by means of the elastic returning means 34 and the spring 33 will bring said lever 10 back to lowered position, as in the figure.

Figures 4 and 5 show in detail the joining device 6 connected to the quick joint 7 respectively in a closing and opening position of the check valve 25 for the feeding of compressed air to the cylinder 12 and 12' of the pneumatic jack 5. Within the hollow cylindrical pin 601 it is provided the insertion of a shaft 35 having at the upper end a frustum of cone shutter 36, which closes the upper opening of said hollow pin 601 and is provided with a sealing ring 37. Between said shaft 35 and said hollow pin 601 is obtained a cavity 46 where are provided other two sealing rings 38, 39. The sleeve 23 is internally provided with a cylindrical seat 40 which can slide on the bushing 24 and where it is housed one end of a compression spring 41, whose other end is housed in a seat 42 obtained in said bushing 24. Said bushing 24 is locked in position through a ring 43 housed on the outer surface of the hollow pin 601. As it can be noticed the shaft 35 has an inner axial duct 44 obtained starting from the lower end of said shaft 35 and is interrupted at the level of two radial holes 45 from which, as it will be later described, the air enter into said duct 44 leaving the cavity 46 obtained between the shaft 35 and the inner wall of the hollow pin 601. Axially to said hole 44 on the supporting base 602 of the joining device 6 is obtained one hole 21 for the entering of the air into the check valve 25. On the outer surface of the shaft 35, instead, is obtained an annular groove 48 where it is inserted tangential as to the shaft body a tubular arm 49 projecting practically on the whole width of the sleeve 23 seat 40 and being fit to allow the vertical translation of the shaft 35 following up an upward movement of the sleeve 23 as to the pin 601 and the bushing 24. Said tubular arm 49 passes through two substantially rectangular slots 54 obtained along the wall of the cylindrical pin 601, said slots 54 having a vertical extension such to allow a suitable upward excursion of said tubular arm 49. Upon the joining device 6 is inserted the quick joint 7 connected to the hose 8. Said joint 7 includes a main body 701 where is obtained an axial hole 702 where it is inserted the pin 601 of the joining device 6. Said axial hole 702 is upperly closed by a valve 47 for the supplying of the compressed air coming from a duct 703 communicating with the hose 8 feeding said air from the bottle. Said valve 47 substantially includes a shutter 50 provided with elastic returning means 51 and including a lower end co-operating with the closing shutter 36 of the upper part of the hollow pin 601 and an upper head 52 which closes the passage at the entering of compressed air into the hole 702. The fastening means of said quick joint 7 to the cylindrical pin 601, as mentioned, are well-known, and then they won't be further described. On the lower part of the figure it can be seen the check valve 25, inserted in the end part 603 of the joining device 6, allowing the entering of air to the cylinders 12, 12' through a duct 53 obtained in said casing 501.

In fig. 5 is shown the phase when it is supplied compressed air to the cylinders 12 and 12'. When the diver decides to tighten the belt 4 to fasten the bottle 3 to the back 2, he just has to fix the quick joint 7 on the joining device 6 of the pneumatic jack 5 and, to allow the compressed air entering to the cylinders 12 and 12', lift with the fingers the sleeve 23 to the direction of the arrows F along the pin 601 and the bushing 24 against the action of the spring 41, in rest position till now, so that the tubular arm 49 makes the whole stroke in the slots 54 of the pin 601 and, being engaged in the annular grove 48, causes an upward vertical translation of the shaft 35 within said fixed pin 601. Consequently the shutter 36 of said shaft 35 rises and presses on the lower end of the shutter 50 of the supplying valve 47 of the joint 7, so that, against the action of the elastic returning means 51, the head 52 of said shutter 50 rises and allows the passing of compressed air from the duct 703, communicating with the hose 8, to the joint 7 axial hole 702. Now the compressed air can go through the cavity 46, enter the radial holes 45, the axial duct 44, the hole 21 obtained in the base 602 and reach the check valve 25, which will supply it to the cylinders 12 and 12' for the driving of the relative pistons 13, 13' and the mechanical security arm 17 of the tightening of the belt 4.

When the diver has supplied to the pneumatic jack 5 a quantity of compressed air sufficient to obtain the required tightening of the belt 4, it has just to release the sleeve 23 so that the spring 41 automatically makes it return to the position of Fig. 4, with consequent lowering of the shaft 35, and then of the shutter 36 too, which will allow the elastic returning means to close back the compressed air supplying valve 47.

As it can be noticed from the preceding description the advantages resulting from the use of a tensioning device of the fastening belt of the compressed air bottles to the back of a jacket or the like for underwater activities according to the embodiment form recorded as example are many ones, and many are the embodiment forms which can be adopted to obtain said advantages without going out of the field of the enclosed claims.

## Claims

1. A tensioning device for the fastening belt (4) of the compressed gas bottles to the back (2) of a jacket (1) or the like for underwater activities, including a pneumatic jack (5) inserted between the two ends of said bottle (3) fastening belt (4) and connected to a suitable compressed gas source through at least one hose (8) provided with a joint (7) for the connection with said jack (5), being said jack (5) fit to supply an optimal tensioning strength of the belt (4) for its tightening on the bottle (3) itself, **characterized in that** said pneumatic jack (5) is connected to said joint (7) through a joining device (6) provided with means (23) manually controllable by the diver to allow the supplying of compressed air to said jack (5) through the opening of a suitable valve (47) positioned in said joint (7).

2. A tensioning device according to claim 1, **characterized in that** the joining device (6) includes at least one fixed part (601) connected to the pneumatic jack (5) and at least one movable part (35) inserted in said fixed part (602) and co-operating with said means (23) manually controllable for the opening of the jack (5) compressed air supplying valve (47).

3. A tensioning device according to claim 2, **characterized in that** said fixed part includes an hollow pin (601) fixed in a not removable way to a seat (503) obtained on the casing (501) of the jack (5) and said movable part (601) includes a shaft (35) housed within said hollow pin (601) and upperly provided with an opening and closing shutter (36) of said hollow pin, being said shutter (36) co-operating with the compressed air supplying valve (47) and controlled by said manually controllable means (23).

4. A tensioning device according to claim 3, **characterized in that** between said hollow pin (601) and said movable shaft (35) is obtained a cavity (46) for the passing of the compressed air coming from the supplying valve (47), being in said shaft (35) obtained at least one axial duct (44) for the passing of the air and one or more radial holes (54) for the entering of air from the cavity (46) to said duct (44).

5. A tensioning device according to claim 3, **characterized in that** said manually controllable means includes a sleeve (23) lowerly fitted on said pin (601) and in which it is upperly obtained a cylindrical seat (40) where are housed means (49) integral with said sleeve (23) and co-operating with the movable shaft (35) for its driving.

6. A tensioning device according to claim 5, **characterized in that** said means integral with the sleeve (23) include at least one tubular arm (49) housed in said seat (40) transversally as to the shaft (35) and inserted between at least two slots (54) obtained on the hollow pin (601) walls, being said arm (49) engaged in an annular groove of said movable shaft (35).

7. A tensioning device according to claim 3, **characterized in that** it includes elastic returning means (41) of the sleeve (23) and the movable shaft (35), being said means (41) fit to close the shaft (35) shutter (36) on said hollow pin (601) so to interrupt the supplying of compressed air from the valve (47) when said sleeve (23) is released.

8. A tensioning device according to claim 3, **characterized in that** said movable shaft (35) includes at least one sealing ring (37) in connection with the hollow pin (601) opening and closing shutter (36).

9. A tensioning device according to claim 4, **characterized in that** in said cavity (46) obtained between said movable shaft (35) and said hollow pin (601) are provided rings (38, 39) positioned below said radial holes (45) of said shaft (35).

10. A tensioning device according to any preceding claim, **characterized in that** said joining device (6) includes at the bottom a threaded part (603) screwed in said seat (503) obtained in the jack (5) casing (501), being within said threaded part provided a check valve (25) for the compressed air supplying to the jack (5).

11. A tensioning device according to claim 10, **characterized in that** between said threaded part (603) and the hollow pin (601) of the joining device (6) is provided a supporting and screwing base (602) of said joining device provided with at least one hole for the passing of the compressed air coming from the axial duct (44) obtained in the movable shaft (35).

12. A tensioning device according to claim 10, **characterized in that** between said supporting base (602) and said seat (503) of the jack(5) casing (501) is provided at least one sealing ring (22).

13. A tensioning device according to claim 1, **characterized in that** said jack (5) includes a plate (11) suitably shaped for the supporting of the bottle (3) surface.

14. A tensioning device according to claim 1, **characterized in that** said jack (5) includes at least one cylinder (12, 12') where airtight slides at least one piston (13, 13') driven by the compressed air coming from the joint (7) and one element (17) for the mechanical lock of the belt tensioning (4), being in the jack casing (501) provided manually controllable means (10, 29, 27) fit to allow at the same time the exhaust of the air from said cylinder (12, 12') and the mechanical unlock of said element (17).

15. A tensioning device according to claim 14, **characterized in that** said manually controllable means include at least a release lever (10) hinged to the jack casing (501) and co-operating with an air exhausting valve (29) from said cylinder (12 and 12') and with a snug (27) coupling, during the tightening of the belt (4), with said mechanical lock element (17).
